# EUROPÄISCHE PATENTSCHRIFT

(11) **EP 4 416 479 B1**
(45) Veröffentlichungstag und Bekanntmachung des Hinweises auf die Patenterteilung: **17.09.2025**
(21) Anmeldenummer: 22777982.4
(22) Anmeldetag: 20.09.2022
(51) Int. Cl.: G01M 17/007

(54) **PRÜFSTAND ZUR ABSICHERUNG VON FAHRASSISTENZFUNKTIONEN EINES AUTOMATISIERTEN KRAFTFAHRZEUGS, VERFAHREN ZUM STEUERN EINES SOLCHEN PRÜFSTANDS UND EINE STEUERVORRICHTUNG FÜR EINEN SOLCHEN PRÜFSTAND**
TEST BENCH FOR SAFEGUARDING DRIVER ASSISTANCE FUNCTIONS OF AN AUTOMATED MOTOR VEHICLE, METHOD FOR CONTROLLING SUCH A TEST BENCH, AND A CONTROL DEVICE FOR SUCH A TEST BENCH
BANC D'ESSAI POUR LA SÉCURISATION DES FONCTIONS D'ASSISTANCE AU CONDUCTEUR D'UN VÉHICULE AUTOMOBILE AUTOMATISÉ, PROCÉDÉ ET DISPOSITIF DE COMMANDE DUDIT BANC D'ESSAI

(30) Priorität: 12.10.2021 DE 102021126342
(43) Veröffentlichungstag der Anmeldung: 21.08.2024
(73) Patentinhaber: Bayerische Motoren Werke Aktiengesellschaft, 80809 München (DE)
(72) Erfinder: HELLER, Martin, 86836 Graben (DE)
(86) Internationale Anmeldenummer: PCT/EP2022/076070
(87) Internationale Veröffentlichungsnummer: WO 2023/061707

(56) Entgegenhaltungen:
- DE-B4- 102008 063 988
- DE-U1- 29 714 191
- FR-A1- 2 941 299

## Beschreibung

Die vorliegende Erfindung betrifft einen Prüfstand zur Absicherung von Fahrassistenzfunktionen eines automatisierten Kraftfahrzeugs, ein Verfahren zum Steuern eines solchen Prüfstands und eine Steuervorrichtung für einen solchen Prüfstand.

Prüfstände zur Absicherung von Fahrassistenzfunktionen eines automatisierten Versuchsfahrzeugs, beispielsweise im Rahmen einer Homologation, sind aus dem Stand der Technik im Allgemeinen bekannt.

Solche Prüfstände weisen zumeist zumindest ein sogenanntes Target auf, welches mit dem automatisierten Versuchsfahrzeug im Rahmen eines Tests bzw. einer Überprüfung auf eine vorbestimmte Art und Weise interagiert. Denkbar ist, dass das zumindest eine Target vom automatisierten Versuchsfahrzeug im Rahmen des Tests zu erkennen ist und/oder dass das automatisierten Kraftfahrzeug dem Target im Rahmen des Tests auszuweichen hat.

Damit eine Position des zumindest einen Targets am Prüfstand vor, während und/oder nach bzw. zwischen Tests verändert werden kann, kann das Target extern angetrieben, z.B. mittels Seilzügen, und/oder intern angetrieben, z.B. mittels eines Elektromotors und einem zum Elektromotor verbundenen Energiespeicher, über eine Prüfstandsoberfläche bewegt werden.

Beim Betrieb eines solchen herkömmlichen Prüfstands, bei dem mittels des bzw. der Targets beispielsweise eine Simulation von Fußgängern und/oder Fahrzeugen durchgeführt wird, können Probleme bei einer Energieversorgung und einem Antrieb der Targets auftreten. Im Verlauf der Tests kann es beispielsweise zu Verzögerungen aufgrund entladener Energiespeicher der Targets kommen.

Auch verändern sich Reibwerte der Prüfstandsoberfläche witterungsbedingt, sodass dies eine Wiederholbarkeit von Testergebnissen negativ beeinflussen kann.

Zudem ist ein herkömmlicher Prüfstandsaufbau meist bautechnisch groß und birgt eine gewisse Beschädigungsgefahr für das Versuchsfahrzeug aber auch den Prüfstand und das Target selbst, wenn das Versuchsfahrzeug die Prüfstandsoberfläche überfährt.

Die FR 2 941 299 A1 beschreibt eine Prüfstrecke für ein Kraftfahrzeug, die mit einer Prüfvorrichtung ausgestattet ist. Die Prüfvorrichtung umfasst ein bewegliches Ziel, welches mit einer bestimmten Geschwindigkeit und in einer bestimmten Richtung kontrolliert in Bezug auf die Strecke bewegt wird.

Die DE 297 14 191 U1 beschreibt eine Rüstvorrichtung für Werkstücke, insbesondere für Messmaschinen, mit einem ortsfesten Rüst- oder Messtisch (Grundplatte) und auf diesem verschiebbaren Werkstückaufnahmen. Die Rüstvorrichtung zeichnet sich durch die Ausbildung als permanent erregter Zweiphasen-Reluktanzschrittmotor (Hybridschrittmotor) aus, bei dem der Rüst- oder Messtisch den Stator und jede Werkstückaufnahme einen Läufer bildet, wobei die als Läufer ausgebildeten Werkstückaufnahmen für ein Werkstück synchron ansteuerbar und verfahrbar sind.

Die DE 10 2008 063 988 A1 beschreibt ein Verfahren, mit welchem Sensoren von Fahrerassistenzsystemen automatisiert charakterisiert werden können. Dabei wird ein Prüfkörper mit Hilfe eines Positioniergeräts auf einem Prüfplatz in eine vordefinierte Prüfposition bezüglich eines Prüffahrzeugs platziert. Ein Sensor des Prüffahrzeugs ist unter Abstrahlen von Messsignalen und durch Auswerten von vom Prüfkörper reflektierten Signalen charakterisierbar. Das Positioniergerät kann mit Hilfe von aus einem magnetischen Material ausgeführten Führungen auf dem Prüfplatz geführt werden. Diese Führungen sind dann an dem Prüfplatz bereitgestellt und wirken mit einem Detektor des Positioniergeräts zusammen. Hierdurch kann sich das Positioniergerät auf dem Prüfplatz ohne ein separates Navigationssystem orientieren.

Vor dem Hintergrund dieses Standes der Technik besteht die Aufgabe der vorliegenden Erfindung darin, eine Vorrichtung und ein Verfahren anzugeben, welche geeignet sind, zumindest die oben genannten Nachteile des Standes der Technik zu überwinden.

Gelöst wird die Aufgabe durch die Merkmale der unabhängigen Ansprüche. Die Unteransprüche haben bevorzugte Weiterbildungen der Erfindung zum Inhalt.

Danach wird die Aufgabe durch einen Prüfstand zur Absicherung von Fahrassistenzfunktionen eines automatisierten Kraftfahrzeugs gelöst.

Der Prüfstand zeichnet sich dadurch aus, dass der Prüfstand zumindest eine Trägerplattform für ein Target und eine Magnetbahnfläche für die zumindest eine Trägerplattform aufweist.

Der Prüfstand zeichnet sich ferner dadurch aus, dass eine zur Magnetbahnfläche verbundene Steuervorrichtung vorgesehen ist.

Die Steuervorrichtung ist ausgestaltet, um ein Magnetbahnflächen-Steuersignal zu der Magnetbahnfläche auszugeben und mittels des Magnetbahnflächen-Steuersignals eine Position der Trägerplattform relativ zu der Magnetbahnfläche einzustellen.

Die Steuervorrichtung kann zusätzlich ausgestaltet sein, um einen Abstand der Trägerplattform von der Magnetbahnfläche durch ein Verändern von durch die Magnetbahnfläche erzeugten magnetischen Kräften einzustellen.

Mit anderen Worten, es wird ein Prüfstand bereitgestellt, der es erlaubt, Fahrassistenzfunktionen eines automatisierten Kraftfahrzeugs zu testen. Das automatisierte Kraftfahrzeug kann daher auch als Proband bzw. Versuchsfahrzeug bezeichnet werden.

Der Prüfstand kann auch als System zur Absicherung von Fahrassistenzfunktionen auf Basis magnetschwebebahnbasierender frei verfahrbarer und positionierbarer (Target-) Trägerplattformen bezeichnet werden.

Der Prüfstand weist daher bevorzugt solche Abmessungen auf, dass das automatisierte Kraftfahrzeug den Prüfstand, insbesondere die eine Prüfstandsoberfläche bildendende Magnetbahnfläche, passieren und sich zur selben Zeit das zumindest eine Target auf der Prüfstandsoberfläche befinden kann. Das heißt, während eines am Prüfstand durchgeführten Tests bzw. Versuchs kann das zumindest eine Target, welches auch als Dummy bezeichnet werden kann, zusammen mit dem Versuchsfahrzeug auf der Magnetbahnfläche angeordnet sein.

Das Kraftfahrzeug kann während des Versuchs, je nach Automatisierungsgrad, das Target beispielsweise seitlich passieren und/oder dem Target ausweichen.

Bei dem Versuchsfahrzeug bzw. Kraftfahrzeug kann es sich um ein, insbesondere automatisiertes, Automobil handeln. Das automatisierte Kraftfahrzeug kann, insbesondere aufgrund von zu prüfenden Fahrassistenzfunktionen, ausgestaltet sein, um eine Quer- und/oder eine Längsführung bei einem automatisierten Fahren des Kraftfahrzeugs zumindest teilweise und/oder zeitweise zu übernehmen.

Das automatisierte Fahren kann so erfolgen, dass die Fortbewegung des Kraftfahrzeugs (weitgehend) autonom erfolgt.

Das Kraftfahrzeug kann ein Kraftfahrzeug der Autonomiestufe 1 sein, d.h. bestimmte Fahrerassistenzsysteme aufweisen, die den Fahrer bei der Fahrzeugbedienung unterstützen, wie beispielsweise einen Abstandsregeltempomat (ACC).

Das Kraftfahrzeug kann ein Kraftfahrzeug der Autonomiestufe 2 sein, d.h. so teilautomatisiert sein, dass Funktionen wie automatisches Einparken, Spurhalten bzw. Querführung, allgemeine Längsführung, Beschleunigen und/oder Abbremsen von Fahrerassistenzsystemen übernommen werden.

Das Kraftfahrzeug kann ein Kraftfahrzeug der Autonomiestufe 3 sein, d.h. so bedingungsautomatisiert, dass der Fahrer das System Fahrzeug nicht durchgehend überwachen muss. Das Kraftfahrzeug führt selbstständig Funktionen wie das Auslösen des Blinkers, Spurwechsel und/oder Spurhalten durch. Der Fahrer kann sich anderen Dingen zuwenden, wird aber bei Bedarf innerhalb einer Vorwarnzeit vom System aufgefordert die Führung zu übernehmen.

Das Kraftfahrzeug kann ein Kraftfahrzeug der Autonomiestufe 4 sein, d.h. so hochautomatisiert, dass die Führung des Fahrzeugs dauerhaft vom System Fahrzeug übernommen wird. Werden die Fahraufgaben vom System nicht mehr bewältigt, kann der Fahrer aufgefordert werden, die Führung zu übernehmen.

Das Kraftfahrzeug kann ein Kraftfahrzeug der Autonomiestufe 5 sein, d.h. so vollautomatisiert, dass der Fahrer zum Erfüllen der Fahraufgabe nicht erforderlich ist. Außer dem Festlegen des Ziels und dem Starten des Systems ist kein menschliches Eingreifen erforderlich. Das Kraftfahrzeug kann ohne Lenkrad und Pedale auskommen.

Um einen Standort des Targets zu verändern, d.h. die Position der Trägerplattform relativ zu der Magnetbahnfläche und/oder den Abstand der Trägerplattform von der Magnetbahnfläche einzustellen, wird die Magnetbahnfläche mittels eines Steuersignals, dem sog. Magnetbahnflächen-Steuersignal, aktiviert.

Bei der Magnetbahnfläche handelt es sich um einen Teil des Prüfstands, auf dem sich die Trägerplattform für das zumindest eine Target befindet. Die Magnetbahnfläche kann auch als Magnetträgerplattformfläche bezeichnet werden.

Die Magnetbahnfläche ist dabei ausgestaltet, um Magnetfelder zu nutzen, um die Trägerplattform und damit das sich auf der Trägerplattform anordenbare Target in einen Schwebezustand zu bringen. Dafür kann die Magnetbahnfläche Spulen aufweisen, die unterhalb der Prüfstandsoberfläche angeordnet sind.

Bei der Magnetbahnfläche kann es sich um ein elektromagnetisches Schwebesystem (electromagnetic suspension, EMS) oder ein elektrodynamisches Schwebesystem (electrodynamic suspension, EDS) handeln.

Das elektromagnetische Schwebesystem umfasst einen Elektromagnet, der mit Gleichstrom erregt ein auf einer gegenüberliegenden Seite eines Luftspaltes angeordnetes ferromagnetisches Material der Trägerplattform magnetisiert, was eine Anziehungskraft zwischen Magnetbahnoberfläche und Trägerplattform bewirkt. Da das anziehende Verfahren ohne Regelung instabil sein kann, kann hier eine aktive Luftspaltregelung in Form des Magnetbahnflächen-Steuersignal eingesetzt werden.

Das elektrodynamische Schwebesystem erzeugt magnetische Wechselfelder, die in nichtmagnetischen elektrischen Leitern, z.B. in Aluminium, die an oder in der Trägerplattform angeordnet sind, Wirbelströme hervorrufen, die ein tieferes Eindringen des magnetischen Feldes verhindern, mit dem Ergebnis einer abstoßenden Kraft zwischen der Trägerplattform und der Magnetbahnfläche. Denkbar ist auch bei dem abstoßenden Verfahren eine aktive Luftspaltregelung bzw. Abstandsregelung in Form des Magnetbahnflächen-Steuersignals einzusetzen.

Als berührungsfreies Antriebsprinzip kann das des Linearmotors eingesetzt werden. Dabei werden auf einer Seite des Luftspalts zwischen Magnetbahnfläche und Trägerplattform Ströme induziert. Die andere, aktive Seite kann in Analogie zu rotierenden Maschinen als Stator bezeichnet werden. Dieser kann als Langstator in und/oder an der Magnetbahnfläche oder als Kurzstator in oder an der Trägerplattform verbaut sein. Beide Systeme können mit supraleitenden Spulen arbeiten und durch den Einsatz von Permanentmagneten energieeffizienter gestaltet werden.

Durch den oben beschriebenen Prüfstand, insbesondere durch den Einsatz der magnetbahnbasierenden Targetgrundfläche bzw. der Magnetbahnfläche, wird kein Antrieb und keine Energieversorgung im Target selbst benötigt und eine reibungsfreie, magnetfeldgesteuerte Beschleunigung und ein entsprechendes Bewegen des Targets ist möglich. Die Trägerplattform kann relativ flach ausgestaltet werden, sodass im Fall eines Zusammenstoßes mit dem Target keine Gefahr für das darüberfahrende Versuchsfahrzeug besteht. Zusammengefasst wird der Prüfstand sicherer, die Targets selbst kostengünstiger und die Infrastruktur ist nachhaltiger.

Nachfolgend wird das oben Beschriebene weiter im Detail dargelegt und konkretisiert.

Das Einstellen des Abstands der Trägerplattform von der Magnetbahnfläche kann ein Anheben der Trägerplattform, um diese von der Magnetbahnfläche in die Schwebe zu heben, und/oder ein Absenken der Trägerplattform umfassen, um diese aus der Schwebe auf die Magnetbahnfläche abzusenken.

Das Einstellen der Position der sich in der Schwebe befindlichen Trägerplattform umfasst ein translatorisches und/oder rotatorisches Bewegen der Trägerplattform.

Der Prüfstand kann eine Luftdüsenanordnung, insbesondere mit mehreren Luftdüsen, aufweisen, die angeordnet und ausgestaltet ist, um ein Luftpolster zwischen der sich in der Schwebe befindlichen Trägerplattform und der Magnetbahnfläche zu erzeugen.

Die Steuervorrichtung kann zu der Luftdüsenanordnung verbunden sein und ausgestaltet sein, um ein Luftdüsenanordnung-Steuersignal zu der Luftdüsenanordnung auszugeben und mittels des Luftdüsenanordnung-Steuersignals das Luftpolster zu steuern.

Der Prüfstand kann eine zu der Steuervorrichtung verbundene Positionssensoranordnung aufweisen, die angeordnet und ausgestaltet ist, um eine aktuelle Position der Trägerplattform als Ist-Position zu erfassen und zu der Steuervorrichtung auszugeben.

Die Steuervorrichtung kann ausgestaltet sein, um das Magnetbahnflächen-Steuersignal basierend auf einem Vergleich der von der Positionssensoranordnung empfangenen Ist-Position und, insbesondere von einer externen Steuervorrichtung empfangenen, Soll-Position zu erzeugen.

Die Steuervorrichtung kann auch ausgestaltet sein, um das Luftdüsenanordnung-Steuersignal basierend auf dem Vergleich der von der Positionssensoranordnung empfangenen Ist-Position und der von der externen Steuervorrichtung empfangenen Soll-Position zu erzeugen.

Das oben Beschriebene lässt sich mit anderen Worten und auf eine konkrete Ausgestaltung bezogen, die nur beispielhaft beschrieben wird und nicht als einschränkend für die vorliegende Erfindung zu werten ist, wie folgt zusammenfassen.

Es kann eine flache, antriebslose, Trägerplattform bereitgestellt werden, die durch in der Bodenfläche eingebaute Spulen und durch elektrisch generierte Magnetfelder in eine schwebende Position gebracht werden kann, sodass diese mittels einer Magnetbahnfläche lenkbar ist und beschleunigt oder abgebremst werden kann.

Bei der Magnetbahnfläche handelt es sich um eine definierte Bodenfläche, die insbesondere vollflächig mit Spulen ausgestattet sein kann. Diese Fläche entspricht dem benötigten Testfeld, in welchem beispielsweise ein Auffahrunfall oder eine Target-Bremsung simuliert bzw. erwartet wird. Hierbei können die Energieversorgung, die für die Spulen benötigt wird, sowie eine Vorrichtung zur Ansteuerung der Spulen baulich im Fahrbahn-Belag bzw. darunter integriert bzw. eingebaut sein. Die sichtbare Oberfläche der Magnetbahnfläche und/oder der Trägerplattform, d.h. die Fläche, die mit dem Versuchsfahrzeug in Kontakt kommt, kann durch eine Beschichtung an vordefinierte bzw. gewünschten Reibwerte angepasst werden.

Durch ein gezieltes Ansteuern der Spulen und ein Detektieren der Trägerplattformen können die Grundplatten bzw. Trägerplattformen auf der Magnetbahnfläche frei gesteuert bzw. bewegt und gelenkt werden.

Somit ist es auch möglich mehrere Targets gleichzeitig zu bewegen oder gezielt zum Stillstand zu bringen. Durch die Detektion der Trägerplattformen in einem Koordinatensystem der Magnetbahnfläche ist auch eine exakte Positionierung der Targets nachvollziehbar und eine aufwändige GPS-Positionierungsmesstechnik wird obsolet oder ist nur noch optional notwendig.

Somit kann auch sichergestellt werden, dass beim Überfahren eines Targets keine Gefahr mehr durch einen erhöhten Aufbau entsteht. Das System wäre ortsgebunden und es würde auch sicherstellen, dass eine Homologation nur am speziellen Einsatzort möglich ist.

Die Energieversorgung der Spulen kann im Bodenunterbau vorgesehen sein und das herkömmlich auftretende Problem entladener Batterien im Target kann damit vermieden werden. Aufgrund des Antriebs über magnetische Kräfte haben Nässe und Feuchtigkeit auch keine oder nur eine geringe Auswirkung auf das Fahrverhalten der Targets.

Wie oben beschrieben kann das System optional auch mit Luftdüsen versehen werden, welche eine Dämpfung durch ein unter den Trägerplattformen entstehendes Luftpolster bereitstellen. Bei einem Ausfall der Spulen bzw. des Magnetfelds wäre hier durch Pneumatik ebenfalls ein kontrolliertes Lenken, Bewegen und/oder Absenken der Trägerplattform möglich.

Zudem wird ein Verfahren zum Steuern eines Prüfstands zur Absicherung von Fahrassistenzfunktionen eines automatisierten Kraftfahrzeugs bereitgestellt.

Der Prüfstand weist zumindest eine Trägerplattform für ein Target, eine Magnetbahnfläche für die zumindest eine Trägerplattform, und eine zur Magnetbahnfläche verbundene Steuervorrichtung auf.

Das Verfahren zeichnet sich dadurch aus, dass es ein Ausgeben eines Magnetbahnflächen-Steuersignals zu der Magnetbahnfläche aufweist.

Das Verfahren zeichnet sich ferner dadurch aus, dass es ein Einstellen einer Position der Trägerplattform relativ zu der Magnetbahnfläche und, optional, eines Abstands der Trägerplattform von der Magnetbahnfläche durch ein Verändern von durch die Magnetbahnfläche erzeugten magnetischen Kräften mittels des Magnetbahnflächen-Steuersignals aufweist.

Bei dem Verfahren kann es sich insbesondere um ein computerimplementiertes Verfahren handeln. Das heißt, einer, mehrere oder alle Schritte des Verfahrens können von einem Computer ausgeführt werden.

Das Einstellen des Abstands der Trägerplattform von der Magnetbahnfläche kann ein Anheben der Trägerplattform, um diese von der Magnetbahnfläche in die Schwebe zu heben, und/oder ein Absenken der Trägerplattform umfassen, um diese aus der Schwebe auf die Magnetbahnfläche abzusenken.

Das Einstellen der Position der sich in der Schwebe befindlichen Trägerplattform umfasst ein translatorisches und/oder rotatorisches Bewegen der Trägerplattform.

Der Prüfstand kann eine Luftdüsenanordnung, insbesondere mit mehreren Luftdüsen, aufweisen, die angeordnet und ausgestaltet ist, um ein Luftpolster zwischen der sich in der Schwebe befindlichen Trägerplattform und der Magnetbahnfläche zu erzeugen. Die Steuervorrichtung kann zu der Luftdüsenanordnung verbunden sein. Das Verfahren kann ein Ausgeben eines Luftdüsenanordnung-Steuersignals zu der Luftdüsenanordnung mittels der Steuervorrichtung und ein Steuern des Luftpolsters mittels bzw. in Abhängigkeit des Luftdüsenanordnung-Steuersignals umfassen.

Der Prüfstand kann eine zu der Steuervorrichtung verbundene Positionssensoranordnung aufweisen. Das Verfahren kann ein Erfassen einer aktuellen Position der Trägerplattform als Ist-Position und ein Ausgeben der erfassten Ist-Position zu der Steuervorrichtung umfassen.

Das Verfahren kann ein Erzeugen des Magnetbahnflächen-Steuersignals mittels der Steuervorrichtung basierend auf einem Vergleich der von der Positionssensoranordnung empfangenen Ist-Position und von einer externen Steuervorrichtung empfangenen Soll-Position umfassen.

Zusätzlich oder alternativ kann das Verfahren ein Erzeugen des Luftdüsenanordnung-Steuersignals mittels der Steuervorrichtung basierend auf dem Vergleich der von der Positionssensoranordnung empfangenen Ist-Position und der von der externen Steuervorrichtung empfangenen Soll-Position umfassen.

Das oben mit Bezug zum Prüfstand Beschriebene gilt analog auch für das Verfahren und umgekehrt.

Zudem wird eine Steuervorrichtung für einen Prüfstand zur Absicherung von Fahrassistenzfunktionen eines automatisierten Kraftfahrzeugs bereitgestellt, wobei der Prüfstand zumindest eine Trägerplattform für ein Target und eine Magnetbahnfläche für die zumindest eine Trägerplattform aufweist.

Die zur Magnetbahnfläche verbindbare Steuervorrichtung zeichnet sich dadurch aus, dass diese ausgestaltet ist, um ein Magnetbahnflächen-Steuersignal zu der Magnetbahnfläche auszugeben und mittels des Magnetbahnflächen-Steuersignals eine Position der Trägerplattform relativ zu der Magnetbahnfläche einzustellen.

Die Steuervorrichtung kann ausgestaltet sein, um einen Abstand der Trägerplattform von der Magnetbahnfläche durch ein Verändern von durch die Magnetbahnfläche erzeugten magnetischen Kräften einzustellen.

Die Steuervorrichtung ist ausgestaltet, um das oben beschriebene Verfahren zum Steuern des Prüfstands auszuführen.

Die Steuervorrichtung kann eine Vorrichtung zur Datenverarbeitung umfassen oder sein. Die Steuervorrichtung kann ein Steuergerät (engl. ECU = electronic control unit oder ECM = electronic control module) aufweisen oder als solches ausgestaltet sein. Denkbar ist auch, dass die Steuervorrichtung ein Backend, insbesondere einen Server, aufweist oder als solches ausgestaltet ist und/oder dazu verbunden ist.

Die Steuervorrichtung kann insbesondere eine in oder an dem automatisierten Kraftfahrzeug verbaute Steuervorrichtung aufweisen. Das heißt, es ist denkbar, dass der Prüfstand, z.B. drahtlos, von einer im oder am Versuchsfahrzeug verbauten Steuervorrichtung gesteuert wird.

Das oben mit Bezug zum Prüfstand und zum Verfahren Beschriebene gilt analog auch für die Steuervorrichtung.

Nachfolgend wird eine Ausführungsform mit Bezug zu Figuren 1 bis 3 beschrieben.
- Fig. 1: zeigt schematisch einen Prüfstand zur Absicherung von Fahrassistenzfunktionen eines automatisierten Kraftfahrzeugs in einer perspektivischen Draufsicht,
- Fig. 2: zeigt schematisch den Prüfstand aus Figur 1 in einer Seitenansicht, und
- Fig. 3: zeigt schematisch ein Ablaufdiagramm eines Verfahrens zum Steuern des Prüfstands aus Figuren 1 und 2.

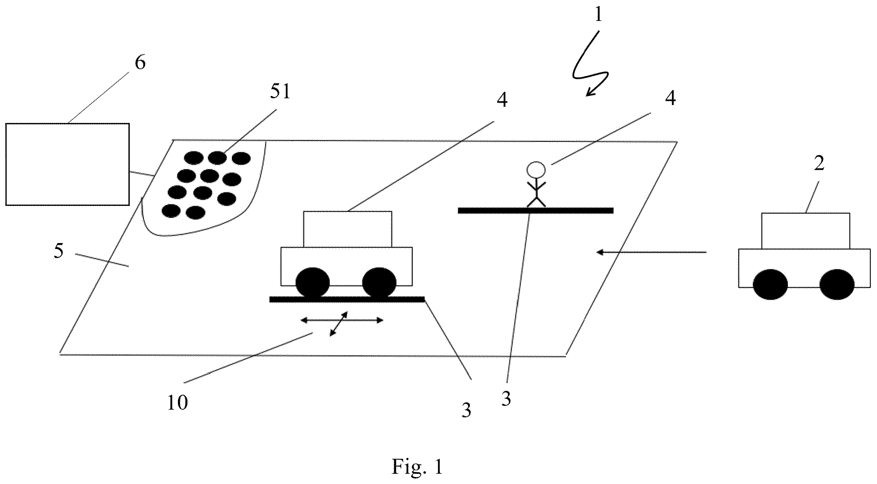

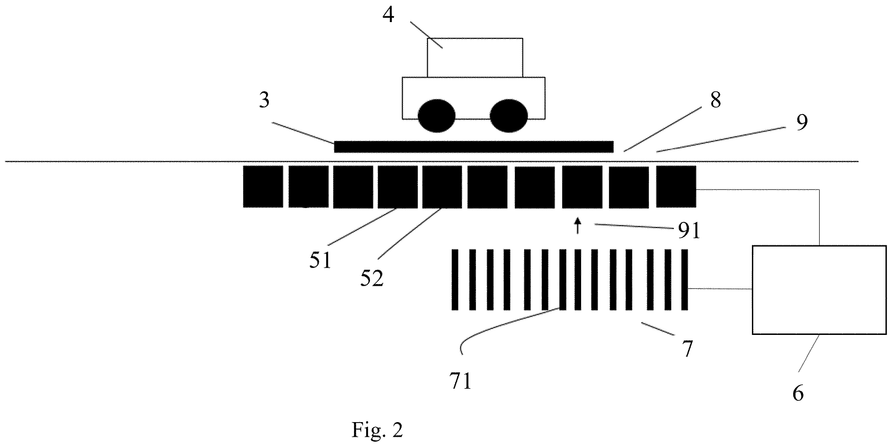

Der in Figuren 1 und 2 dargestellte Prüfstand 1 zur Absicherung von Fahrassistenzfunktionen eines automatisierten Kraftfahrzeugs 2, welches nachfolgend als Versuchsfahrzeug bezeichnet wird, umfasst zwei Trägerplattformen 3 für jeweils ein darauf angeordnetes Target 4, eine Magnetbahnfläche 5 für die zwei Trägerplattformen 3 und eine Luftdüsenanordnung 7 mit mehreren Luftdüsen 71, die unterhalb einer Spulenanordnung der Magnetbahnfläche 5, die mehrere Spulen 51 und eine Positionssensoranordnung 52 umfasst, angeordnet ist.

Der Prüfstand 1 umfasst ferner eine zur Magnetbahnfläche 5, insbesondere zu den Spulen 51 und der Positionssensoranordnung 52, und zur Luftdüsenanordnung 7 verbundene Steuervorrichtung 6.

Die Positionssensoranordnung 52 ist ausgestaltet, um eine jeweilige aktuelle Position der zwei Trägerplattformen 3 zu bestimmen und als Ist-Position zu der Steuervorrichtung 6 auszugeben.

Die Steuervorrichtung 6 ist ausgestaltet, um mittels eines zu den Spulen 51 ausgegebenen Magnetbahnflächen-Steuersignals ein durch die Spulen 51 erzeugtes Magnetfeld 8 zu steuern und mittels eines zu der Luftdüsenanordnung 7 ausgegebenen Luftdüsenanordnung-Steuersignals ein von den Luftdüsen 71 der Luftdüsenanordnung 7 erzeugtes Luftpolster 9 zu steuern.

Durch ein Verändern des Magnetfelds 8 mittels des Magnetbahnflächen-Steuersignals und der daraus resultierenden magnetischen Kräfte auf die zwei Trägerplattformen 3 kann eine jeweilige Position der zwei Trägerplattformen 3 relativ zu und ein jeweiliger Abstand der zwei Trägerplattformen 3 von der Magnetbahnfläche 5 eingestellt werden.

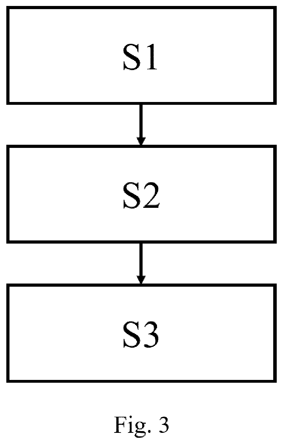

Das Einstellen der Position der Trägerplattformen 3 wird nachfolgend im Detail auch mit Bezug zu Figur 3 beschrieben, welche das Ablaufdiagramm des Verfahrens zum Steuern des oben beschriebenen Prüfstands 1 darstellt.

In einem ersten Schritt S1 des Verfahrens bestimmt die Positionssensoranordnung 52 eine jeweilige aktuelle Position der zwei Trägerplattformen 3 auf der Magnetbahnfläche 5 und gibt diese als Ist-Position zu der Steuervorrichtung 6 aus.

In einem zweiten Schritt S2 des Verfahrens bestimmt die Steuervorrichtung 6 basierend auf der jeweiligen aktuellen Position der zwei Trägerplattformen 3 und einer jeweiligen Soll-Position der zwei Trägerplattformen 3 das Magnetbahnflächen-Steuersignal und das Luftdüsenanordnung-Steuersignal, und gibt das bestimmte Magnetbahnflächen-Steuersignal zu der Spulenanordnung mit den Spulen 52 und das bestimmte Luftdüsenanordnung-Steuersignal zu der Luftdüsenanordnung 7 mit den Luftdüsen 71 aus.

Die Soll-Position kann von einer (nicht dargestellten) externen Steuervorrichtung, wie beispielweise einem Personal-Computer eines Prüfstandnutzers, erhalten werden.

In einem dritten Schritt S3 des Verfahrens erfolgt ein Einstellen bzw. Verändern der Ist-Position der jeweiligen Trägerplattform 3, deren Ist-Position nicht mit der Soll-Position übereinstimmt.

Im vorliegenden Fall ist dies die Ist-Position der Trägerplattform 3, das als das Target 4 ein weiteres Kraftfahrzeug trägt, wie dies durch die eine Bewegung signalisierenden Pfeile 10 in Figur 1 angedeutet ist. Die Ist-Position der weiteren Trägerplattform 3, die als das Target 4 einen menschlichen Dummy trägt, stimmt hingegen mit der Soll-Position überein, sodass hier kein Verändern der Ist-Position erfolgt.

Zum Verändern der Ist-Position der Trägerplattform 3 wird diese zunächst mittels dem von dem Spulen 51 erzeugten Magnetfeld 8, genauer gesagt der daraus resultierenden auf die Trägerplattform 3 wirkenden magnetischen Kräfte, angehoben, d.h. von der Magnetbahnfläche 5 beabstandet, und damit in einen in Figur 2 gezeigten Schwebezustand über der Magnetbahnfläche 5 gebracht. Dazu wird das Magnetfeld 8 gemäß dem Magnetbahnflächen-Steuersignal verändert.

Zudem erfolgt simultan zum Anheben der Trägerplattform 3 ein Aktivieren der Luftdüsenanordnung 7 mittels des Luftdüsenanordnung-Steuersignals, um das zwischen der Trägerplattform 3 und der Magnetbahnfläche angeordnete Luftpolster 9 mittels eines durch die Spulenanordnung strömenden Luftstroms 91 zu erzeugen.

Anschließend erfolgt ein Bewegen der Trägerplattform 3 durch ein translatorisches und/oder rotatorisches Verfahren der Trägerplattform 3 mittels dem sich gemäß dem Magnetbahnflächen-Steuersignal verändernden durch die Spulen 51 erzeugten Magnetfeld 8.

Das Bewegen der Trägerplattform 3 erfolgt so lange, bis die von der Positionssensoranordnung 52 erfasste und zu der Steuervorrichtung 6 ausgegebene Ist-Position mit der Soll-Position der Trägerplattform 3 übereinstimmt.

Das Luftpolster 9 wird dabei gemäß Ist-Position der Trägerplattform 3 gesteuert, d.h. die Luftdüsen 71 der Luftdüsenanordnung 7 werden mittels des Luftdüsenanordnung-Steuersignals so angesteuert, dass sich das Luftpolster 9 mit der Trägerplattform 9 relativ zur Magenbahnfläche 5 bewegt.

Nach Erreichen der Soll-Position erfolgt ein Absenken der Trägerplattform 3, bei der die Trägerplattform 3 mittels dem von dem Spulen 51 erzeugten Magnetfeld 8 aus der Schwebe auf die Magnetbahnfläche 5 abgesenkt wird.

Dazu wird das Magnetfeld 8 gemäß dem Magnetbahnflächen-Steuersignal verändert. Die Luftdüsenanordnung 7 wird parallel zu dem Absenken mittels dem Luftdüsenanordnung-Steuersignal deaktiviert.

Mittels des Luftpolsters 9 kann demnach während dem kompletten Verfahren bzw. Bewegen der Trägerplattform sichergestellt werden, dass die Trägerplattform bei einem Ausfall der Spulenanordnung nicht auf die Magnetbahnfläche 5 fällt, sondern kontrolliert mittels dem Luftpolster 9 abgesenkt werden kann.

Denkbar wäre auch ein translatorisches und/oder rotatorisches Bewegen der Trägerplattform 3 relativ zur Magnetbahnfläche 5 mittels des Luftpolsters 9.

### Bezugszeichenliste

- 1: Prüfstand
- 2: Versuchsfahrzeug bzw. automatisiertes Kraftfahrzeug
- 3: Trägerplattform für Target
- 4: Target
- 5: Spulen
- 52: Positionssensoranordnung
- 6: Steuervorrichtung
- 7: Luftdüsenanordnung
- 71: Luftdüsen
- 8: Magnetfeld
- 9: Luftpolster
- 91: Luftstrom
- 10: Bewegungsrichtungen der Trägerplattform

- S1-S3: Schritte des Verfahrens zum Steuern des Prüfstands

## Patentansprüche

1. Prüfstand (1) zur Absicherung von Fahrassistenzfunktionen eines automatisierten Kraftfahrzeugs (2), mit zumindest einer Trägerplattform (3) für ein Target, wobei der Prüfstand (1) eine als Testfeld ausgebildete Magnetbahnfläche (5) für die zumindest eine Trägerplattform (3) aufweist,
**dadurch gekennzeichnet, dass**
die Magnetbahnfläche (5) ausgestaltet ist, um die Trägerplattform (3) unter Nutzung eines Magnetfelds in einen Schwebezustand zu bringen, und dass der Prüfstand (1) eine zur Magnetbahnfläche (5) verbundene Steuervorrichtung (6) aufweist, die ausgestaltet ist, um ein Magnetbahnflächen-Steuersignal zu der Magnetbahnfläche (5) auszugeben und mittels des Magnetbahnflächen-Steuersignals eine Position der Trägerplattform (3) relativ zu der Magnetbahnfläche (5) einzustellen, wobei das Einstellen der Position der sich in dem Schwebezustand befindlichen Trägerplattform (3) ein translatorisches und/oder rotatorisches Bewegen der Trägerplattform (3) umfasst.

2. Prüfstand (1) nach Anspruch 1, **dadurch gekennzeichnet, dass** die Steuervorrichtung (6) ausgestaltet ist, um einen Abstand der Trägerplattform (3) von der Magnetbahnfläche (5) durch ein Verändern von durch die Magnetbahnfläche (5) erzeugten magnetischen Kräften einzustellen.

3. Prüfstand (1) nach Anspruch 2, **dadurch gekennzeichnet, dass** das Einstellen des Abstands der Trägerplattform (3) von der Magnetbahnfläche (5) ein Anheben der Trägerplattform (3) umfasst, um diese von der Magnetbahnfläche (5) in die Schwebe zu heben, und/oder ein Absenken der Trägerplattform (3) umfasst, um diese aus der Schwebe auf die Magnetbahnfläche (5) abzusenken.

4. Prüfstand (1) nach Anspruch 3, **dadurch gekennzeichnet, dass** der Prüfstand (1) eine Luftdüsenanordnung (7) aufweist, die angeordnet und ausgestaltet ist, um ein Luftpolster (9) zwischen der sich in der Schwebe befindlichen Trägerplattform (3) und der Magnetbahnfläche (5) zu erzeugen.

5. Prüfstand (1) nach Anspruch 4, **dadurch gekennzeichnet, dass** die Steuervorrichtung (6) zu der Luftdüsenanordnung (7) verbunden ist und ausgestaltet ist, um ein Luftdüsenanordnung-Steuersignal zu der Luftdüsenanordnung (7) auszugeben und mittels des Luftdüsenanordnung-Steuersignals das Luftpolster (9) zu steuern.

6. Prüfstand (1) nach einem der vorhergehenden Ansprüche **dadurch gekennzeichnet, dass** der Prüfstand (1) eine zu der Steuervorrichtung (6) verbundene Positionssensoranordnung (52) aufweist, die angeordnet und ausgestaltet ist, um eine aktuelle Position der Trägerplattform (3) als Ist-Position zu erfassen und zu der Steuervorrichtung (6) auszugeben.

7. Prüfstand nach Anspruch 6, **dadurch gekennzeichnet, dass** die Steuervorrichtung (6) ausgestaltet ist, um das Magnetbahnflächen-Steuersignal basierend auf einem Vergleich der von der Positionssensoranordnung (52) empfangenen Ist-Position und von einer externen Steuervorrichtung empfangenen Soll-Position zu erzeugen.

8. Prüfstand (1) nach Anspruch 7, soweit auf Anspruch 5 rückbezogen, **dadurch gekennzeichnet, dass** die Steuervorrichtung (6) ausgestaltet ist, um das Luftdüsenanordnung-Steuersignal basierend auf dem Vergleich der von der Positionssensoranordnung (52) empfangenen Ist-Position und der von der externen Steuervorrichtung empfangenen Soll-Position zu erzeugen.

9. Verfahren zum Steuern eines Prüfstands (1) zur Absicherung von Fahrassistenzfunktionen eines automatisierten Kraftfahrzeugs (2), wobei der Prüfstand zumindest eine Trägerplattform (3) für ein Target (4) und eine als Testfeld ausgebildete Magnetbahnfläche (5) für die zumindest eine Trägerplattform (3) aufweist,
**dadurch gekennzeichnet, dass**
die Magnetbahnfläche (5) ausgestaltet ist, um die Trägerplattform (3) unter Nutzung eines Magnetfelds in einen Schwebezustand zu bringen,
dass der Prüfstand (1) eine zur Magnetbahnfläche (5) verbundene Steuervorrichtung (6) aufweist,
und dass das Verfahren aufweist:
- Ausgeben (S2), mittels der Steuervorrichtung (6), eines Magnetbahnflächen-Steuersignals zu der Magnetbahnfläche (5), und
- Einstellen (S3), mittels des Magnetbahnflächen-Steuersignals, einer Position der Trägerplattform (3) relativ zu der Magnetbahnfläche (5), wobei das Einstellen der Position der sich in dem Schwebezustand befindlichen Trägerplattform (3) ein translatorisches und/oder rotatorisches Bewegen der Trägerplattform (3) umfasst.

10. Verfahren nach Anspruch 9, **dadurch gekennzeichnet, dass** ein Abstand der Trägerplattform (3) von der Magnetbahnfläche (5) durch ein Verändern von durch die Magnetbahnfläche (5) erzeugten magnetischen Kräften eingestellt wird.

## Claims

1. Test bench (1) for safeguarding driver assistance functions of an automated motor vehicle (2), comprising at least one support platform (3) for a target, the test bench (1) comprising a magnetic track surface (5) in the form of a test field for the at least one support platform (3),
**characterized in that**
the magnetic track surface (5) is configured to bring the support platform (3) into a levitated state using a magnetic field, and **in that** the test bench (1) comprises a control device (6) connected to the magnetic track surface (5) and configured to output a magnetic track surface control signal to the magnetic track surface (5) and, by means of the magnetic track surface control signal, to adjust a position of the support platform (3) relative to the magnetic track surface (5), wherein adjusting the position of the support platform (3) in the levitated state comprises translationally and/or rotationally moving the support platform (3).

2. Test bench (1) according to Claim 1, **characterized in that** the control device (6) is configured to adjust a distance between the support platform (3) and the magnetic track surface (5) by changing magnetic forces generated by the magnetic track surface (5).

3. Test bench (1) according to Claim 2, **characterized in that** adjusting the distance between the support platform (3) and the magnetic track surface (5) comprises raising the support platform (3) in order to levitate the latter from the magnetic track surface (5), and/or comprises lowering the support platform (3) in order to lower the latter from the levitated state onto the magnetic track surface (5).

4. Test bench (1) according to Claim 3, **characterized in that** the test bench (1) comprises an air nozzle arrangement (7) arranged and configured to generate an air cushion (9) between the levitated support platform (3) and the magnetic track surface (5).

5. Test bench (1) according to Claim 4, **characterized in that** the control device (6) is connected to the air nozzle arrangement (7) and is configured to output an air nozzle arrangement control signal to the air nozzle arrangement (7) and to control the air cushion (9) by means of the air nozzle arrangement control signal.

6. Test bench (1) according to any of the preceding claims, **characterized in that** the test bench (1) comprises a position sensor arrangement (52) connected to the control device (6) and arranged and configured to detect a current position of the support platform (3) as actual position and to output it to the control device (6).

7. Test bench according to Claim 6, **characterized in that** the control device (6) is configured to generate the magnetic track surface control signal on the basis of a comparison of the actual position received from the position sensor arrangement (52) and the target position received from an external control device.

8. Test bench (1) according to Claim 7, insofar as referring back to Claim 5, **characterized in that** the control device (6) is configured to generate the air nozzle arrangement control signal on the basis of the comparison of the actual position received from the position sensor arrangement (52) and the target position received from the external control device.

9. Method for controlling a test bench (1) for safeguarding driver assistance functions of an automated motor vehicle (2), wherein the test bench comprises at least one support platform (3) for a target (4) and a magnetic track surface (5) in the form of a test field for the at least one support platform (3),
**characterized in that**
the magnetic track surface (5) is configured to bring the support platform (3) into a levitated state using a magnetic field,
**in that** the test bench (1) comprises a control device (6) connected to the magnetic track surface (5),
and **in that** the method comprises:
- outputting (S2), by means of the control device (6), a magnetic track surface control signal to the magnetic track surface (5), and
- adjusting (S3), by means of the magnetic track surface control signal, a position of the support platform (3) relative to the magnetic track surface (5), wherein adjusting the position of the support platform (3) in the levitated state comprises translationally and/or rotationally moving the support platform (3).

10. Method according to Claim 9, **characterized in that** a distance between the support platform (3) and the magnetic track surface (5) is adjusted by changing magnetic forces generated by the magnetic track surface (5).

## Revendications

1. Banc d'essai (1) pour la sécurisation de fonctions d'assistance à la conduite d'un véhicule automobile automatisé (2), comprenant au moins une plate-forme porteuse (3) pour une cible, le banc d'essai (1) comprenant une surface de piste magnétique (5) conçue sous forme de champ d'essai pour ladite au moins une plate-forme porteuse (3),
**caractérisé en ce que**
la surface de piste magnétique (5) est conçue de façon à mettre la plate-forme porteuse (3) en un état de sustentation au moyen d'un champ magnétique, et **en ce que** le banc d'essai (1) comprend un dispositif de commande (6) relié à la surface de piste magnétique (5), qui est conçu pour émettre un signal de commande de surface de piste magnétique vers la surface de piste magnétique (5) et régler, au moyen du signal de commande de la surface de piste magnétique, une position de la plate-forme porteuse (3) par rapport à la surface de piste magnétique (5), le réglage de la position de la plate-forme porteuse (3) dans l'état de sustentation comprenant un mouvement de translation et/ou de rotation de la plate-forme porteuse (3).

2. Banc d'essai (1) selon la revendication 1, **caractérisé en ce que** le dispositif de commande (6) est conçu de façon à régler une distance entre la plate-forme porteuse (3) et la surface de piste magnétique (5) en modifiant les forces magnétiques générées par la surface de piste magnétique (5).

3. Banc d'essai (1) selon la revendication 2, **caractérisé en ce que** le réglage de la distance entre la plate-forme porteuse (3) et la surface de piste magnétique (5) comprend un soulèvement de la plate-forme porteuse (3) afin de la soulever de la surface de piste magnétique (5) pour la mettre en sustentation, et/ou un abaissement de la plate-forme porteuse (3) afin de l'abaisser depuis la sustentation sur la surface de piste magnétique (5).

4. Banc d'essai (1) selon la revendication 3, **caractérisé en ce que** le banc d'essai (1) comprend un agencement (7) de buses d'air qui est agencé et conçu de façon à générer un coussin d'air (9) entre la plate-forme porteuse (3) se trouvant en sustentation et la surface de piste magnétique (5).

5. Banc d'essai (1) selon la revendication 4, **caractérisé en ce que** le dispositif de commande (6) est relié à l'agencement (7) de buses d'air et est conçu de façon à émettre un signal de commande d'agencement de buses d'air vers l'agencement (7) de buses d'air et à commander le coussin d'air (9) au moyen du signal de commande d'agencement de buses d'air.

6. Banc d'essai (1) selon l'une des revendications précédentes, **caractérisé en ce que** le banc d'essai (1) comprend un dispositif (52) de détection de position relié au dispositif de commande (6), qui est agencé et conçu de façon à détecter une position actuelle de la plate-forme porteuse (3) en tant que position réelle, et la transmettre au dispositif de commande (6).

7. Banc d'essai selon la revendication 6, **caractérisé en ce que** le dispositif de commande (6) est conçu de façon à générer le signal de commande de surface de piste magnétique sur la base d'une comparaison entre la position réelle reçue par le dispositif (52) de détection de position et une position de consigne reçue d'un dispositif de commande externe.

8. Banc d'essai (1) selon la revendication 7, dans la mesure où elle est rattachée à la revendication 5, **caractérisé en ce que** le dispositif de commande (6) est conçu de façon à générer le signal de commande d'agencement de buses d'air sur la base de la comparaison entre la position réelle reçue par le dispositif (52) de détection de position et la position de consigne reçue du dispositif de commande externe.

9. Procédé de commande d'un banc d'essai (1) pour la sécurisation de fonctions d'assistance à la conduite d'un véhicule automobile automatisé (2), le banc d'essai comprenant au moins une plate-forme porteuse (3) pour une cible (4) et une surface de piste magnétique (5) conçue sous forme de champ d'essai pour ladite au moins une plate-forme porteuse (3),
**caractérisé en ce que**
la surface de piste magnétique (5) est conçue de façon à mettre la plate-forme porteuse (3) en un état de sustentation au moyen d'un champ magnétique,
**en ce que** le banc d'essai (1) comprend un dispositif de commande (6) relié à la surface de piste magnétique (5), et **en ce que** le procédé comprend :
- l'émission (S2), au moyen du dispositif de commande (6), d'un signal de commande de surface de piste magnétique vers la surface de piste magnétique (5), et
- le réglage (S3), au moyen du signal de commande de surface de piste magnétique, d'une position de la plate-forme porteuse (3) par rapport à la surface de piste magnétique (5), le réglage de la position de la plate-forme porteuse (3) se trouvant dans l'état de sustentation comprenant un mouvement de translation et/ou de rotation de la plate-forme porteuse (3).

10. Procédé selon la revendication 9, **caractérisé en ce qu'**une distance entre la plate-forme porteuse (3) et la surface de piste magnétique (5) est réglée en modifiant les forces magnétiques générées par la surface de piste magnétique (5).
